# EUROPÄISCHE PATENTSCHRIFT

(11) **EP 2 801 628 B1**
(45) Veröffentlichungstag und Bekanntmachung des Hinweises auf die Patenterteilung: **28.08.2019**
(21) Anmeldenummer: 14166743.6
(22) Anmeldetag: 30.04.2014
(51) Int. Cl.: C21D 1/10, C21D 1/42, C21D 11/00, C21D 9/40

(54) **Verfahren zum Randschichthärten eines metallischen Bauteils**
Method for hardening surface layers of a metal component
Procédé de trempe superficielle d'un composant métallique

(30) Priorität: 08.05.2013 DE 102013208478
(43) Veröffentlichungstag der Anmeldung: 12.11.2014
(73) Patentinhaber: Aktiebolaget SKF, 415 50 Göteborg (SE)
(72) Erfinder: Gegner, Juergen, 91301 Forchheim (DE); Nierlich, Wolfgang, 97424 Schweinfurt (DE)
(74) Vertreter: Kuhstrebe, Jochen

(56) Entgegenhaltungen:
- EP-A2- 1 988 179
- WO-A1-2010/006689
- WO-A1-2010/007635
- WO-A1-2011/107869
- US-A1- 2011 248 023

## Beschreibung

Die Erfindung betrifft ein Verfahren zum Randschichthärten eines metallischen Werkstücks, bei dem zunächst ein Bereich des Werkstücks mit mindestens einem Induktor erwärmt wird, indem der mindestens eine Induktor in eine Bewegungsrichtung mit vorgegebener Geschwindigkeit entlang der Oberfläche des Werkstücks bewegt wird, wobei nach der Erwärmung des Bereichs des Werkstücks mit mindestens einem Kühlelement eine Abkühlung des Bereichs erfolgt, indem das mindestens eine Kühlelement in die Bewegungsrichtung mit vorgegebener Geschwindigkeit bewegt wird.

Ein Verfahren der gattungsgemäßen Art ist beispielsweise aus DE 10 2005 006 701 B3 bekannt. Hier ist das Herstellen eines Lagerrings für ein Großlager beschrieben. Die Lagerringe haben Laufbahnen mit einer gehärteten Randschicht. Zwecks Härtens wird die Randschicht der Laufbahn mittels des elektromagnetischen Feldes eines Induktors erwärmt und anschließend abgeschreckt, um das Material des Lagerrings an seiner Oberfläche zu härten. Ähnliche Lösungen zeigen die US 2011/248023 A1**,** die EP 2 088 211 A1**,** die EP 1 988 179 A1 und die WO 2011/107869 A1**.**

Nachteilig ist bei den vorbekannten Lösungen folgender Umstand: Wenn Bauteile mit einer solchen Geometrie induktiv randschichtgehärtet werden sollen, deren Dicke quer zur Bewegungsrichtung des Induktors variiert, ergeben sich teilweise sehr ungleichmäßige Härteprofile, gekennzeichnet durch die Randhärtetiefe (auch Einhärtungstiefe genannt, z. B. Tiefe bei 550 HV oder 80% der Oberflächen-Mindesthärte in HV). Hierbei ist zu beachten, dass diese Ungleichmäßigkeiten durch eine in solchen Werkstückbereichen nach dem Härten häufig erforderliche, tiefer abtragende mechanische Bearbeitung noch weiter verstärkt werden. Ein Ring eines Kegelrollenlagers mit einem Bord oder mit zwei Borden und dem Freistich sowie ein bordloser Außenring eines zweireihigen Kegelrollenlagers sind Beispiele für ein solches Bauteil.

Der Erfindung liegt die **Aufgabe** zugrunde, ein Verfahren zur induktiven Randschichthärtung der eingangs genannten Art so fortzubilden, dass es in einfacher Weise möglich ist, eine gleichmäßige Randhärtetiefe im fertig bearbeiteten Zustand selbst in Gebieten stärkeren Materialabtrags auch bei Werkstücken mit geometrisch ungleichmäßigen Querschnitten beim Härten zu erreichen. Demgemäß sollen Ungleichmäßigkeiten ausgeglichen bzw. vermieden werden, die infolge der Geometrie des Werkstücks bei Anwendung bekannter Randschichthärteverfahren insbesondere nach der Endbearbeitung zu befürchten sind. Das Verfahrens soll auch zur Erzeugung eines maßgeschneiderten ungleichmäßigen Verlaufs der Randhärtetiefe entlang eines gleichmäßigen Querschnitts eines Werkstücks dienen, von dem Material bei der nachfolgenden mechanischen Bearbeitung ungleichmäßig stark abgetragen wird. Das Verfahren soll auch für die Kombination dieser Aufgabenstellung tauglich sein.

Die **Lösung** dieser Aufgabe durch die Erfindung ist dadurch gekennzeichnet, dass die Erwärmung des Bereichs mittels des mindestens einen sich relativ hierzu bewegenden Induktors entlang der zu härtenden Oberfläche des Werksstücks senkrecht zur Bewegungsrichtung mit unterschiedlicher Magnetfeldstärke erfolgt, wobei eine Veränderung der Magnetfeldstärke entlang der Oberfläche des Werkstücks senkrecht zur Bewegungsrichtung abhängig von der Form und/oder der folgenden Hartbearbeitung des Werkstücks erfolgt.

Dabei wird entweder mindestens ein Vorwärminduktor und mindestens ein Härteinduktor zur Erwärmung des Bereichs verwendet, wobei der Vorwärminduktor in Bewegungsrichtung dem Härteinduktor vorherläuft, oder ein einziger Induktor mit mindestens einem Vorwärmteil und mindestens einem Härteteil zur Erwärmung des Bereichs verwendet, wobei das Vorwärmteil in Bewegungsrichtung dem Härteteil vorherläuft.

Der Vorwärminduktor und/oder der Härteinduktor oder das Vorwärmteil und/oder das Härteteil des Induktors können mit unterschiedlicher Magnetfeldstärke betrieben werden. Dabei sieht eine spezielle Ausführungsform vor, dass entlang der zu härtenden Oberfläche des Werkstücks senkrecht zur Bewegungsrichtung der Vorwärminduktor oder das Vorwärmteil des Induktors mit unterschiedlicher Magnetfeldstärke und der Härteinduktor oder das Härteteil des Induktors mit konstanter Magnetfeldstärke betrieben werden.

Anstatt der Verwendung von mindestens zwei Induktoren im Tandem kann also auch ein einziger Induktor bestehend aus mindestens zwei die Randschicht erwärmenden Induktorspulenteilen verwendet werden. In diesem Fall übernimmt das in Bewegungsrichtung mit einem bestimmten Abstand vorherlaufende Induktorspulenteil (Vorwärmteil, kann alternativ auch aus mehreren Spulenteilen bestehen) die soeben beschriebene Aufgabe des Vorwärmens. Das nachfolgende Induktorspulenteil (Härteteil, kann ebenfalls alternativ aus mehreren Spulenteilen bestehen) erfüllt die Funktion des Härteinduktors. Wird nur ein Induktor verwendet, dessen mindestens zwei Spulenteile aus demselben Generator (Wechselstromquelle, z. B. Halbleiterumrichter) mit gleicher elektrischer Leistung gespeist werden, so wird die jeweilige Funktion (Vorwärmen, Härten) durch das Design der Spulenteile (z. B. Art und Dichte der magnetflusssteuernden Beblechung, Kopplungsabstand, Verlauf des Spulenteils) erreicht. Bei mehr als zwei Spulenteilen kann der (einzige) Induktor auch aus mehreren Vorwärm- und Härteteilen aufgebaut sein.

Für schlupffreies Härten eines kreisförmig geschlossenen Werkstücks kann in zwei Teilbereichen des Werkstücks ein mindestens zweimaliges Überstreichen der Teilbereiche mittels mindestens eines Induktors erfolgen.

Die Erwärmung eines definierten Abschnitts des Bereichs mit dem mindestens einen Härteinduktor oder dem Härteteil des Induktors erfolgt bevorzugt in einem Zeitraum von höchstens 10 Sekunden, besonders bevorzugt in einem Zeitraum von höchstens 5 Sekunden.

Die Erwärmung des Bereichs mit dem mindestens einen Härteinduktor oder dem Härteteil des Induktors erfolgt des Weiteren bevorzugt auf eine Temperatur zwischen 950 °C und 1.300 °C zum Zwecke des Austenitisierens.

Die Abkühlung des Bereichs erfolgt zumeist durch ein Kühlelement in Form einer Abschreckbrause.

Das metallische Werkstück weist bevorzugt einen Stahl mit einem Kohlenstoffgehalt zwischen 0,2 und 1,7 Gew.-% auf, besonders bevorzugt zwischen 0,3 und 1,0 Gew.-%.

Der Abstand zwischen den mit gleicher Geschwindigkeit bewegten Induktoren zum Vorwärmen (Vorwärminduktor) und zum Härten (Härteinduktor) bzw. zwischen dem Vorwärmteil und dem Härteteil nur eines Induktors in Bewegungsrichtung beeinflusst gemäß der Fourierschen Wärmeleitungsgleichung gemeinsam mit der Geschwindigkeit und der Frequenz des Wechselstroms die Einwirktiefe des Vorwärmens und die dabei örtlich zum Zeitpunkt der Erhitzung durch den Härteinduktor bzw. das Härteteil vorliegende Temperatur über eine gewisse Tiefe in das Werkstück hinein. Bei der für einen bestimmten Sollwert optimalen Wahl dieses Abstands ist zu beachten, dass eine größere Randhärtetiefe durch ein tieferes, dabei noch hinreichendes Vorwärmen begünstigt wird. Weiterhin fördert eine größere Geschwindigkeit des Härteinduktors bzw. Härteteils die erwünschte Tendenz zum Kurzzeithärten bei höherer Temperatur.

Wird der einzige Induktor mit z. B. zwei Spulenteilen von geringem Abstand entsprechend vorbekannter Verfahren zum induktiven Randschichthärten verwendet, so ist die Randhärtetiefe bestimmt durch maximale Oberflächentemperatur und Vorschubgeschwindigkeit des Induktors. Größere gewünschte Randhärtetiefen erfordern eine hohe Temperaturdifferenz zwischen Oberfläche und Perlitzone. Dies kann zu einer Gefügeversprödung in oberflächennahen Zonen führen. Kurzzeithärten (hohe Austenitisierungstemperatur und hohe Vorschubgeschwindigkeit) führen zu einer diffusionsunterstützten Gefügehomogenisierung mit der Folge günstigerer Duktilität im gehärteten Zustand. Eine gewünschte erhöhte Randhärtetiefe kann dennoch erreicht werden, wenn man mittels Vorwärminduktor bzw. Vorwärmteil eines Induktors in ausreichender Tiefe für erhöhte Temperaturen sorgt (zeitlicher Abstand zwischen Härteinduktor und Vorwärminduktor bzw. Härteteil und Vorwärmteil ermöglicht durch Wärmeleitungsdauer ausreichende Temperaturen für nachfolgende Härtung).

Vorwärm- und Härteinduktor bzw. Vorwärm- und Härteteil werden mit gleicher Geschwindigkeit über die Werkstückoberfläche bewegt. Diese Geschwindigkeit kann entlang des Werkstückumfangs verändert werden. In einer bevorzugten Ausführung der Erfindung bleibt das Werkstück während des Härtevorgangs in Ruhe. Es kann jedoch auch relativ zu ruhenden oder ebenfalls bewegten Induktoren bzw. Induktorteilen gleichförmig und/oder beschleunigt bewegt werden (z. B. Drehen eines Wälzlagerrings).

Insbesondere der Vorwärminduktor bzw. das Vorwärmteil kann dabei in seiner Ausgestaltung - beispielsweise hinsichtlich der Beblechung und des Kopplungsabstands zur Werkstückoberfläche - so dem ungleichförmigen Querschnitt des Werkstücks angepasst werden, dass an Orten ansonsten niedrigerer Randhärtetiefe verstärkt vorgewärmt wird. Der Vorteil der Verwendung eines an Werkstückgeometrie und Materialabtrag der mechanischen Bearbeitung angepassten Vorwärminduktors bzw. Vorwärmteils liegt unter anderem in der Möglichkeit des auf die Randschicht begrenzten, örtlich optimierten thermischen Konditionierens des Werkstoffs für den nachfolgenden Austenitisierungsprozess durch den Härteinduktor bzw. das Härteteil nur eines einzelnen Induktors (siehe oben). Das einheitliche Vorwärmen des gesamten Werkstücks würde keine örtliche Begünstigung des Härtens in einzelnen Bereichen des Querschnitts erlauben und müsste zudem, insbesondere bei größeren Wandstärken (hohes Werkstückvolumen), auf Temperaturen unterhalb der Anlasstemperatur des martensitischen Härtens (typischerweise 150 bis 250 °C) begrenzt bleiben, da sonst die Rückerwärmung aus dem gesamten Werkstück heraus z. B. schon während des Vorschubhärtens zu einem unerwünschten Anlassen der abgeschreckten gehärteten Randschicht führen würde.

Die Veränderung der Magnetfeldstärke zwischen Vorwärm- und Härteinduktor bzw. Vorwärm- und Härteteil kann dabei in Abhängigkeit von der Dicke (Wandstärke) des Werkstücks - gemessen senkrecht auf eine Oberfläche des Werkstücks - erfolgen. Genauso kann die Veränderung der Magnetfeldstärke entlang der zu härtenden Oberfläche des Werkstücks senkrecht zur Bewegungsrichtung auch in Abhängigkeit vom Querschnitt (z. B. Kanten) erfolgen, den das Werkstück in einer Schnittebene aufweist, auf der die Bewegungsrichtung senkrecht steht. Weiterhin kann die Veränderung der Magnetfeldstärke zwischen Vorwärm- und Härteinduktor bzw. Vorwärm- und Härteteil in Abhängigkeit von einer örtlich variierenden Tiefe des Materialabtrags (z. B. an Borden, Freistichen) bei einer sich an das Härten anschließenden Bearbeitung des Werkstücks erfolgen. Auch jede Variation dieser Verfahrensweisen ist möglich.

Eine Variante des erfindungsgemäßen Verfahrens sieht vor, dass vor der Erwärmung mit dem mindestens einen Härteinduktor ein mindestens zweimaliges Überstreichen des Bereichs mittels des Vorwärminduktors zwecks Vorwärmens des Bereichs erfolgt. Genauso kann bei Verwendung eines Induktors mit Vorwärm- und Härteteil dieses Vorwärmen eines Bereichs durch ein mindestens zweimaliges Überstreichen mit beiden Teilen des Induktors erfolgen. Ein solcher Bereich ist insbesondere das Startgebiet eines umlaufenden Vorschubhärtens, von dem aus danach je ein Tandem aus Vorwärm- und Härteinduktor bzw. je ein Induktor mit Vorwärm- und Härteteil in entgegengesetzter Richtung über die Oberfläche des Werkstücks bewegt wird.

Die Erwärmung eines definierten Abschnitts des Bereichs (beispielsweise mit einer Erstreckung in Bewegungsrichtung von 15 mm) zum Zweck des Austenitisierens mit dem mindestens einen Härteinduktor bzw. Härteteil erfolgt bevorzugt im Rahmen einer Kurzzeithärtung, d. h. wie oben erwähnt in einem Zeitraum von höchstens 10 Sekunden, vorzugsweise in einem Zeitraum von höchstens 5 Sekunden. Die Erwärmung des Bereichs mit dem mindestens einen Härteinduktor bzw. Härteteil erfolgt in diesem Fall wie erwähnt bevorzugt auf eine Temperatur zwischen 950 °C und 1.300 °C. Es kann aber auch für längere Zeit bei niedrigerer Temperatur (z. B. 900 °C) mit dem mindestens einen Härteinduktor bzw. Härteteil erwärmt werden. Bei dieser Art des Austenitisierens nimmt allerdings die Gefahr der Korngrenzenversprödung der beeinflussten Werkstoffrandschicht und damit auch die Gefahr von Härterissen zu.

Die Abkühlung des Bereichs erfolgt bevorzugt durch ein Kühlelement in Form einer Abschreckbrause. Dabei kann beispielsweise eine wässrige Polymerlösung als Abschreckmittel verwendet werden.

Das Verfahren wird mithin bevorzugt bei einem Werkstück eingesetzt, das entlang der Bewegungsrichtung zumindest abschnittsweise in einer Schnittebene, die senkrecht auf der Bewegungsrichtung steht, eine ungleichmäßige Querschnittskontur aufweist. Beispiele eines solchen Werkstücks sind ein Kegelrollenlagerring oder ein Zylinderrollenlagerring mit Bord oder Borden sowie ein zweireihiger bordloser Kegelrollenlageraußenring.

Durch Trennen der Erwärmung in Vorwärmen mittels eines Induktors oder eines Induktorteils und Austenitisieren mittels eines Induktors oder Induktorteils wird eine gepufferte, dem ungleichmäßigen Querschnitt angepasste Temperaturverteilung im Werkstück eingestellt. Für eine bestimmte Randhärtetiefe wird eine erhöhte Vorschubgeschwindigkeit erreicht, die das Kurzzeithärten ermöglicht, was sich günstig auf die Gefügeausbildung in der Randschicht auswirkt und Werkstoffversprödung und daher Rissneigung vermeidet.

Im Unterschied zu vorbekannten Lösungen wird also nicht beim Erwärmen des zu härtenden Werkstücks entlang der Oberfläche senkrecht zur Bewegungsrichtung eine konstante Induktion von dem Induktor bzw. von den Induktoren ins Werkstück eingeleitet, sondern die Magnetfeldstärke wird geändert und in Abhängigkeit von der Querschnittskontur entlang der Oberfläche des Werkstücks senkrecht zur Bewegungsrichtung bzw. der Tiefe des Materialabtrags bei einer nachfolgenden z. B. mechanischen Hartbearbeitung angepasst.

Die vorliegende Erfindung bezieht sich generell auf die Verwendung mindestens eines Induktors für die kontinuierliche Härtung im gleichmäßigen Vorschub bei Werkstücken mit geometrisch ungleichförmigem Querschnitt.

Dabei läuft bevorzugt ein vorwärmender Induktor (Vorwärminduktor) in Bewegungsrichtung dem Härteinduktor, dem die Abschreckbrause folgt, voraus. Genauso läuft bei Verwendung nur eines Induktors dessen Vorwärmteil (erste/s Induktorspulenteil/e) dem Härteteil (letzte/s Induktorspulenteil/e, gekennzeichnet in Bewegungsrichtung des Induktors) voraus. Das an den Bauteilquerschnitt angepasste Vorwärmen ermöglicht an Stellen ansonsten relativ geringerer Randhärtetiefe durch thermische Pufferung der Wärmeableitung (Verminderung des Temperaturgefälles im Bauteilinneren) beim nachfolgenden Härten eine Erhöhung und damit Angleichung der Randhärtetiefe über den gesamten Querschnitt, wobei auch die anschließende Hartbearbeitung entsprechend berücksichtigt werden kann.

Die Erfindung ermöglicht es und zielt darauf ab, die zum Erreichen einer bestimmten Randhärtetiefe im Werkstück erforderliche Vorschubgeschwindigkeit nach unten begrenzen zu können. Um Randschichtversprödung durch infolge Kornvergröberung geschwächte Korngrenzen zu vermeiden, erweist sich das Kurzzeithärten als besonders günstig. Hierbei wird, wie zuvor beschrieben, durch Erhöhung der Temperatur die zum Austenitisieren erforderliche Zeit vermindert. Die gesteigerte Temperatur fördert dabei die mikrostrukturellen Prozesse zur Ausbildung eines homogenen austenitischen Gefüges stärker als das, mit der Bewegung und Umordnung von Korngrenzen verbundene, versprödende Kornwachstum. Dieses Kurzzeithärten führt zu einem duktileren Gefüge mit verminderter Rissneigung beim Härten.

Es können bevorzugt unlegierte oder niedrig legierte Stähle mit einem Kohlenstoffgehalt zwischen 0,2 und 1,7 Gew.-%, bevorzugt zwischen 0,3 und 1,0 Gew.-% (z. B. Vergütungsstähle, durchhärtende Wälzlagerstähle) induktiv gehärtet werden. Das Vorwärmen erfolgt bevorzugt unterhalb der Temperatur, bei der die Austenitbildung im Gefüge abgeschlossen ist (d. h. unterhalb der Linie G-O-S-E (Ac3, Acm) im Eisen-Kohlenstoff-Zustandsschaubild). Dabei wird die Randschichttemperatur des Bauteils auf Werte unterhalb oder oberhalb (dann ohne Ummagnetisierungsverluste mit einer besseren Wärmewirkung in der Tiefe) der Currie-Temperatur gebracht.

Gehärtet wird bevorzugt im Modus des Kurzzeithärtens: Hierbei wird innerhalb weniger Sekunden auf Austenitisierungstemperatur von 950 bis 1.300 °C erwärmt und diese ebenfalls nur wenige Sekunden gehalten.

Durch das beschriebene Verfahren wird eine gleichmäßige Randhärtetiefe auch entlang ungleichmäßiger Querschnitte eines Bauteils erreicht. Der Vorteil des Kurzzeithärtens liegt in einer Erhöhung der Korngrenzenenergie z. B. durch Reinigung der Korngrenzen von Verunreinigungen (z. B. Phosphor), was sprödem interkristallinem Bruchverhalten unter statischer und zyklischer Beanspruchung entgegenwirkt. Eine nur bei der so erhöhten Temperatur zusätzliche Homogenisierung des Werkstoffs in der Austenitisierungszone verzögert signifikant die Werkstoffalterung im Betrieb, z. B. bei Wälzbeanspruchung.

Die Erfindung wird besonders bevorzugt bei Wälzlagern eingesetzt und hier bei Großlagerringen und Drehverbindungen.

In der Zeichnung ist ein Ausführungsbeispiel der Erfindung dargestellt.
- Fig. 1: zeigt in perspektivischer Darstellung einen Ausschnitt eines Werkstücks, dessen Oberfläche mit einer Härteeinheit induktiv randschichtgehärtet wird, wobei es sich bei dem Werkstück beispielsweise um den zwei Borde aufweisenden Innenring eines Kegelrollen-Großlagers handeln kann,
- Fig. 2: zeigt einen Schnitt durch ein randschichtgehärtetes Werkstück mit Angabe des örtlichen Verlaufs der Randhärtetiefe.

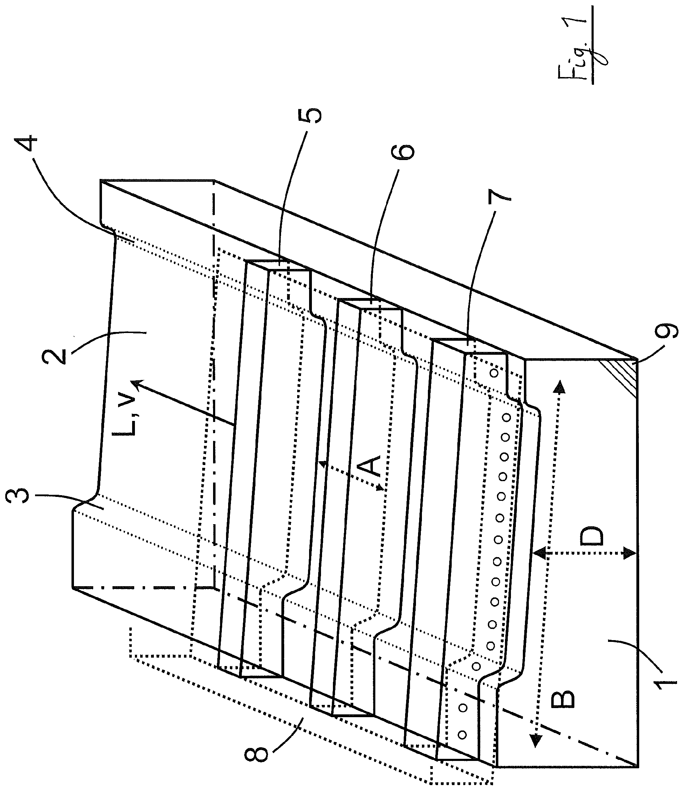

In Fig. 1 ist ein Werkstück 1 zu erkennen, das entlang der Breite B des zu härtenden Bereichs und bezüglich der Dicke D einen ungleichmäßigen Querschnitt aufweist. Betrachtet man den Querschnitt des Werkstücks 1 entlang der Breite B des zu härtenden Bereichs, so ist festzustellen, dass an den Kantenzonen 3 und 4 (Borde) ein z. B. infolge der konkaven Krümmung stärkerer Wärmeabfluss in das Werkstückinnere oder elektromagnetisch begründete Ankopplungsverminderung die Erzielung einer gleichmäßigen Randhärtetiefe behindert. Zudem wird an den Kantenbereichen 3 und 4 bei der anschließenden Hartbearbeitung mehr Material als im Mittelbereich der Breite B (Laufbahnbereich) abgetragen, beispielsweise um Freistiche und Borde zu formen. Die Bewegungsrichtung L entlang der Länge des Werkstücks der mit einer Geschwindigkeit v über die Oberfläche 2 des Werkstücks 1 bewegten Härteeinheit 8 (z. B. gemeinsamer Träger, in Fig. 1 angedeutet) ist normal zur Querschnittsfläche des Werkstücks orientiert.

Betrachtet wird nunmehr ein Bereich des Werkstücks, der induktiv randschichtgehärtet werden soll; bei diesem Bereich handelt es sich beispielsweise um einen Bereich der Breite B des Querschnitts unterhalb der Oberfläche 2 des Werkstücks 1 in Fig. 1 über eine Länge L vom unteren zum oberen Ende.

Zur Randschichthärtung wird eine Härteeinheit 8 in Bewegungsrichtung L über die Oberfläche 2 des Werkstücks 1 geführt, was mit einer definierten vorgegebenen Vorschubgeschwindigkeit v erfolgt.

Die Härteeinheit 8 umfasst - auf einem gemeinsamen Träger oder mehreren separaten Trägern angeordnet - die Induktoren 5 und 6 zur Erwärmung des Werkstücks 1 in seinem Oberflächenbereich sowie ein Kühlelement 7 (Abschreckbrause, Düsen in Fig. 1 durch Kreise angedeutet).

Im Ausführungsbeispiel ist nicht nur ein einziger Induktor vorgesehen, sondern ein Vorwärminduktor 5 und ein Härteinduktor 6. Während der Härteinduktor mit im Wesentlichen konstanter Magnetfeldstärke betrieben wird, was dem klassischen Randschichthärteprozess entspricht, erfolgt mittels des Vorwärminduktors 5 in Abhängigkeit von der am jeweiligen Ort konkret vorliegenden Kontur des Werkstückquerschnitts eine spezifische Vorwärmung mit entsprechend angepasster Magnetfeldstärke. Diese Magnetfeldstärke ist abgestimmt auf den Querschnitt und stellt durch örtlich maßgeschneidertes Vorwärmen sicher, dass der Randschichthärteprozess auch bei senkrecht zur Bewegungsrichtung L ungleichmäßigen Werkstückquerschnitten gleichmäßig verläuft.

Trotz des ungleichmäßigen geometrischen Querschnitts des Werkstücks und unterschiedlicher Aufmaße für die anschließende Hartbearbeitung werden so ungleichmäßige Randhärtetiefen am fertig bearbeiteten Bauteil vermieden. Demgemäß werden Ungleichmäßigkeiten im Härteverlauf über den Querschnitt ausgeglichen, die sich ansonsten ohne Einsatz der beschriebenen Vorgehensweise ergeben würden. Vor dem Härten (Austenitisieren und Abschrecken) wird also ein Vorwärmen durchgeführt. Dieses Vorwärmen wird dem ungleichmäßigen Querschnitt des Werkstücks und/oder einem lokal erhöhten Materialabtrag bei der folgenden Hartbearbeitung in dem Sinne angepasst, dass an Orten ansonsten niedrigerer Randhärtetiefe verstärkt bzw. überhaupt nur dort vorgewärmt wird. Dies kann in Verbindung mit der Steuerung der Leistungseinbringungen am Generator des Vorwärminduktors beispielsweise durch örtlich unterschiedliche Beblechung (z. B. durch Anordnung und Materialwahl von feldverstärkenden Konzentratoren) oder Kopplungsabstände am Vorwärminduktor sowie durch den Spulenverlauf realisiert werden, womit die gewünschte lokal entlang des ungleichmäßigen Querschnitts senkrecht zur Bewegungsrichtung unterschiedliche Wärmeeinwirkung auf die Oberfläche 2 des Werkstücks 1 erzielt wird. Neben der Induktorenbreite wird die Temperaturcharakteristik des werkstückangepassten lokal unterschiedlichen Vorwärmens zu Beginn des Härtens mit dem Härteinduktor durch die Wahl des Abstands A zwischen Vorwärminduktor 5 und Härteinduktor 6 sowie der Vorschubgeschwindigkeit v optimal eingestellt.

Im dargestellten Ausführungsbeispiel wird ein separater Vorwärminduktor 5 mit eigener Energieversorgung (Generator) verwendet, was aber nicht zwingend erforderlich ist. Der (einzige) Induktor kann auch so gestaltet sein, dass er bei seiner Bewegung entlang der Werkstückoberfläche während der Wärmebehandlung den gerade im Zugriff befindlichen Abschnitt zunächst mit einem Vorwärmteil (z. B. erste Induktorspulenhälfte) vorwärmt und anschließend mit einem Härteteil (z. B. zweite Induktorspulenhälfte, gekennzeichnet in Bewegungsrichtung L) härtet.

Dies kann beispielsweise durch örtlich unterschiedliche Beblechung (z. B. durch Anordnung und Materialwahl von Konzentratoren) oder Kopplungsabstände am Vorwärmteil des einzigen Induktors oder auch durch den Verlauf des Spulenteils realisiert werden, so dass eine (gemeinsame) Stromversorgung (Generator) ausreicht, um die gewünschte lokal entlang des ungleichmäßigen Querschnitts senkrecht zur Bewegungsrichtung unterschiedliche Wärmeeinwirkung auf die Oberfläche 2 des Werkstücks 1 zu erzielen. Der Vorwärmteil des Induktors ist dabei in seiner Gestaltung und Wirkung dem ungleichförmigen Querschnitt in dem Sinne angepasst, dass an Orten ansonsten niedrigerer Randhärtetiefe und/oder erhöhten Materialabtrags bei der folgenden Hartbearbeitung verstärkt bzw. überhaupt nur dort vorgewärmt wird. Dies kann beispielsweise durch örtlich unterschiedliche Beblechung (z. B. durch Anordnung und Materialwahl von feldverstärkenden Konzentratoren) oder Kopplungsabstände am Vorwärmteil sowie durch den verlauf des Spulenteils realisiert werden, womit die gewünschte lokal entlang des ungleichmäßigen Querschnitts senkrecht zur Bewegungsrichtung unterschiedliche Wärmeeinwirkung auf die Oberfläche 2 des Werkstücks 1 erzielt wird. Neben der Induktorenteilbreite wird die Temperaturcharakteristik des werkstückangepassten lokal unterschiedlichen Vorwärmens zu Beginn des Härtens mit dem Härteteil durch die Wahl des Abstands A zwischen Vorwärmteil 5 und dem Härteteil 6 sowie der Geschwindigkeit v optimal eingestellt.

Auch der Härteteil eines einzigen Induktors bzw. der Härteinduktor z. B. einer Tandemanordnung mit separatem vorauslaufendem Vorwärminduktor kann zur weiteren Optimierung der beschriebenen lokalen Anpassung der Randhärtetiefe beispielsweise örtlich entlang des Werkstückquerschnitts unterschiedliche Beblechung aufweisen, z. B. vermindert oder erhöht in den Kantenbereichen 3 und 4. Auch kann der Kopplungsabstand variieren. Zudem kann der Spulenverlauf des Härteteils bzw. des Härteinduktors geeignet angepasst ausgeführt werden. Dabei kann neben der Randhärtetiefe auch der erreichte Gefügezustand im Oberflächenbereich (z. B. Vermeidung von überhitztem Härten) maßgeblich sein.

Wird nur ein Induktor eingesetzt, ergibt sich zwar eine weniger flexible, aber kostengünstigere und technisch weniger aufwändige Alternative zum Einsatz eines separaten Vorwärm- und Härteinduktors.

Es kann beispielsweise wegen dort erforderlichen tieferen Materialabtrags (z. B. Freistich) bei der sich an das induktive Härten anschließenden mechanischen Bearbeitung (z. B. Hartdrehen, Schleifen, Honen) auch gezielt erwünscht sein, an bestimmten Stellen des Querschnitts des Werkstücks 1, z. B. den Kantenbereichen 3 und 4 in Fig. 1, eine im Vergleich zum mittleren Bereich (zwischen den Bereichen 3 und 4) relativ höhere Randhärtetiefe zu erzeugen. Mit dem erfindungsgemäßen Verfahren kann auch eine solche maßgeschneidert ungleichmäßige Verteilung der Randhärtetiefe entlang des Querschnitts des Werkstücks erreicht werden.

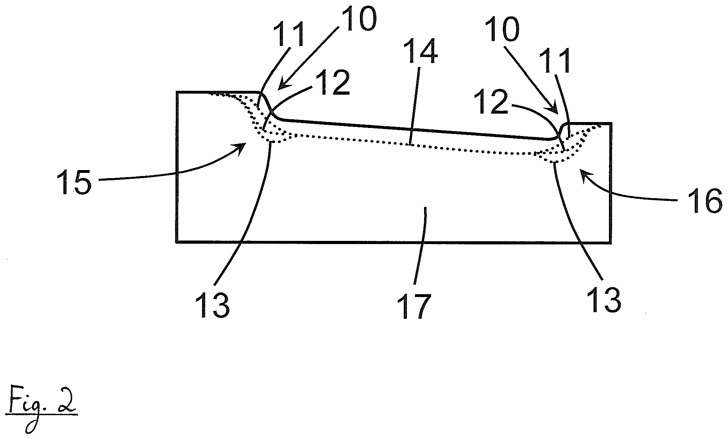

Dies wird anhand des in Fig. 2 dargestellten Querschnitts des Werkstücks 1 näher erläutert. Dort sind schematisch verschiedene Randhärteverläufe 10 dargestellt, nämlich die drei Verläufe 11, 12 und 13 der Randhärtetiefe. Jeder Punkt dieser Verläufe kennzeichnet den Abstand der Randhärtetiefe von der Oberfläche. Der mittlere Verlauf 14 der Linie gehört gemeinsam zu allen drei Verläufen 11, 12 und 13. Der Verlauf 11 kennzeichnet ein induktives Härten mit einem bekannten Verfahren. Hier kommt es gegenüber dem mittleren Bereich zu einer Verminderung der Randhärtetiefe in den Kantenbereichen 15 und 16 (entsprechend den Bezugsziffern 3 und 4 in Fig. 1). Mit dem erfindungsgemäßen Verfahren kann diese ungleichmäßige Härteverteilung durch ein örtliches Vorwärmen ausgeglichen werden, wie Verlauf 12 in Fig. 2 veranschaulicht.

Nun kann es sein, dass z. B. wegen erhöhten Materialabtrags bei der anschließenden Hartbearbeitung des Werkstücks gerade in diesen Kantenbereichen 15, 16 der Schnittebene 17 eine gegenüber dem mittleren Bereich (Verlauf 14) erhöhte Randhärtetiefe erforderlich ist. Mit dem erfindungsgemäßnen Verfahren kann in einem solchen Fall auch der maßgeschneidert ungleichmäßige Verlauf 13 erzeugt werden, der duch eine örtlich größere Randhärtetiefe um die Kantenbereiche gekennzeichnet ist.

Die Eindringtiefe nimmt mit abnehmender Frequenz des Wechselstroms zu. Zum Erzielen hoher Randhärtetiefen insbesondere bei möglichst kurzer Einwirkzeit (Kurzzeithärten) ist deshalb zur Minderung der erforderlichen Wärmeleitung grundsätzlich eine Mittelfrequenzanlage vorzuziehen.

Das in Fig. 1 gezeigte Ausführungsbeispiel kann sich an einem schienenförmigen, linearen Bauteil orientieren, wie beispielsweise einer Schiene eines Linearlagers.

Hier beginnt das Verfahren am Schienenanfang mit dem Vorwärmen mittels des Vorwärminduktors und endet am anderen Schienenende mit dem Abschrecken nach dem Austenitisieren durch den Härteinduktor. Hier kann beispielsweise ein Paar von Induktoren (Vorwärm- und Härteinduktor) eingesetzt werden. Genauso ist die entsprechende Verwendung eines (einzigen) Induktors mit mindestens einem Vorwärm- und mindestens einem Härteteil möglich.

Natürlich kann das vorgeschlagene Verfahren in Abhängigkeit von der Geometrie des Werkstücks auch modifiziert werden.

Bei ringförmig geschlossenen Bauteilen (z. B. bei Großlagerringen) kann ein schlupfloses Induktionshärten nach dem vorgeschlagenen Verfahren wie folgt durchgeführt werden:
Der Start erfolgt mit einem Vorwärminduktor und einem Härteinduktor in Tandemanordnung pendelnd über einen zu erwärmenden Bereich von beispielsweise 100 mm. Dabei arbeitet zunächst nur der Vorwärminduktor. Bei der letzten Rückkehrpendelbewegung kann der Härteinduktor zugeschaltet werden. Sodann fährt eine zweite Tandemanordnung bestehend aus Vorwärminduktor und Härteinduktor hinzu. Dabei treffen die Härteinduktoren der beiden Paare am Startpunkt zusammen und beginnen von dort einen jeweiligen entgegengesetzten Rundweg (Zone des Vorschubhärtens) um den Umfang des Bauteils herum. Sobald hinreichender Zwischenraum vorhanden ist, treten nacheinander die Abschreckbrausen hinzu und schrecken ab. In der stärker erwärmten Startzone kann eine zusätzliche, stationäre Abschreckbrause verwendet werden. Alternativ pendeln zunächst alle vier Induktoren (die Härteinduktoren stehen hier zusammen) über den Startbereich oder es pendelt dort ein weiterer separater Startzoneninduktor, der den Bereich der Startzone erwärmt und vor dem Zusammenfahren der beiden Tandemanordnungen entfernt wird.

Bei der Wiederannäherung der beiden Vorwärminduktoren in der Endzone wird bevorzugt zunächst einer dieser Vorwärminduktoren und bei weiterer Annäherung der zweite Vorwärminduktor entfernt, worauf die Hauptinduktoren zusammenlaufen, gemeinsam entfernt werden und schlussabgeschreckt wird, wofür eine weitere zusätzliche Abschreckbrause verwendet werden kann.

Alternativ kann die Endzone von beispielsweise 100 bis 300 mm Ausdehnung wie folgt behandelt werden:
Ein dritter Vorwärminduktor und ein dritter Härteinduktor werden zeitlich nacheinander im Bereich der kommenden Endzone tätig. Bei Annäherung des ersten und zweiten Vorwärminduktors an den dritten Härteinduktor (in diesem Moment ist der dritte Vorwärminduktor bereits entfernt) werden die beiden Vorwärminduktoren zuerst entfernt und bei Annäherung des ersten und des zweiten Härteinduktors an den dritten Härteinduktor wird auch noch der dritte Härteinduktor entfernt. Sodann laufen der erste und der zweite Härteinduktor zusammen, werden gemeinsam entfernt und es wird schlussabgeschreckt, bei Bedarf mit einer weiteren zusätzlichen Abschreckbrause. Anstatt eines dritten Vorwärminduktors und eines dritten Härteinduktors kann auch ein einziger zusätzlicher Endzoneninduktor verwendet werden, der über seine separate Generatorsteuerung zunächst als Vorwärm- und anschließend als Härteinduktor im beschriebenen Sinne betrieben wird. Durch z. B. Wahl der Beblechung oder des Kopplungsabstands kann ebenfalls lokal im Querschnitt des Werkstücks, z. B. an Kantenbereichen, die Härtung unterstützt werden.

Eine weitere Verfahrensalternative stellt auf den Einsatz eines in Spulenteile (beinhaltend mindestens ein Vorwärmteil und mindestens ein Härteteil) segmentierten einzigen Induktors für jede Umfangsseite des ringförmig geschlossenen Bauteils ab:
Der Start des Verfahrens erfolgt mit zwei zusammengefahrenen segmentierten Induktoren in der Stellung Härteteil an Härteteil und mit einem Abschrecken möglichst bald nach Auseinanderlaufen der Induktoren. Soll auch die Startzone durch querschnittsangepasstes Vorwärmen optimiert werden, kann dort ein zusätzlicher, ausreichend breiter Vorwärminduktor stationär oder pendelnd (das ermöglicht gegebenenfalls eine kürzere Bauform) verwendet werden, der nach der Vorwärmbehandlung entfernt wird, damit sodann die segmentierten Induktoren am Startpunkt zusammenfahren und danach auseinanderlaufen können. Auch einer der segmentierten Induktoren selbst oder beide segmentierte Induktoren können zum Vorwärmen über der Startzone pendeln.

Nun beginnen die beiden segmentierten Induktoren ihren härtenden Rundweg um den Umfang des Bauteils (Vorschubhärten). Bei Wiederannäherung der Induktoren arbeitet im Bereich des Treffpunkts (Endzone) ein gegebenenfalls zunächst pendelnder, ausreichend breiter Härteinduktor, der möglichst spät (zugeschaltet und) entfernt wird, bevor die segmentierten Induktoren zusammenlaufen, gemeinsam entfernt werden und dann schlussabgeschreckt wird. Die notwendige Breite des vom zusätzlichen Härteinduktor, der den Werkstoff in der Randschicht auf hinreichend hohe Austenitisierungstemperatur erwärmt, überstrichenen Endzonengebiets (Pendelbreite) hängt auch vom Abstand zwischen dem Vorwärm- und dem Härteteil der beiden im Vorschub härtenden Induktoren sowie der Härtbarkeit (z. B. Lage der Perlitnase) des verwendeten Stahls ab. Der Endzoneninduktor wärmt während des Pendels zunächst die Randschicht vor. Dieses Vorwärmen kann durch eine spezielle Generatorsteuerung präzisiert werden.

Soll auch die Endzone durch querschnittsangepasstes Vorwärmen optimiert werden, wird z. B. direkt vor dem Einbringen des Härteinduktors ein genügend breiter Vorwärminduktor stationär oder hinreichend großzügig pendelnd über dem Bereich betrieben oder eine Tandemanordnung aus einem Vorwärm- und einem Härteinduktor verwendet, bei der zuerst nur der Vorwärminduktor z. B. pendelnd eingeschaltet und gegebenenfalls - um Platz zu gewinnen - bereits vor Entfernen des Härteinduktors zurückgezogen wird. Wird, wie oben beschrieben, nur ein Endzoneninduktor verwendet, so kann dieser zu Verbesserung der querschnittsangepassten Härtung angepasst an die Querschnittskontur beblecht werden. Das Verfahren mit einem einzigen Endzoneninduktor wurde bereits oben beschrieben.

Der segmentierte Induktor wird mit entsprechend geeigneter Geschwindigkeit und Aufteilung zwischen Vorwärm- und Härteteil im Vorschub betrieben.

Zur Behandlung der Start- und Endzone sind weitere Verfahrensvarianten möglich.

### Bezugszeichenliste

- 1: Werkstück
- 2: Oberfläche
- 3: Kantenbereich
- 4: Kantenbereich
- 5, 6: Induktor / Induktoren
- 5: Vorwärminduktor / Vorwärmteil des Induktors
- 6: Härteinduktor / Härteteil des Induktors
- 7: Kühlelement
- 8: Härteeinheit
- 9: Schnittebene des Werkstücks (Querschnitt)
- 10: Randhärteverläufe
- 11: Randhärteverlauf 1
- 12: Randhärteverlauf 2
- 13: Randhärteverlauf 3
- 14: Randhärteverlauf 1, 2 und 3 im mittleren Querschnittsbereich
- 15: Kantenbereich
- 16: Kantenbereich
- 17: Schnittebene des Werkstücks (Querschnitt)

- L: Bewegungsrichtung, Länge in Bewegungsrichtung
- v: Geschwindigkeit / Vorschubgeschwindigkeit
- D: Dicke
- B: Breite des zu härtenden Bereichs
- A: Abstand zwischen Vorwärminduktor und Härteinduktor bzw. Vorwärmteil und Härteteil des Induktors

## Patentansprüche

1. Verfahren zum Randschichthärten eines metallischen Werkstücks (1), bei dem zunächst ein Bereich des Werkstücks mit mindestens einem Induktor (5, 6) erwärmt wird, indem der mindestens eine Induktor (5, 6) in eine Bewegungsrichtung (L) mit vorgegebener Geschwindigkeit (v) entlang der Oberfläche (2) des Werkstücks (1) bewegt wird, wobei nach der Erwärmung des Bereichs des Werkstücks (1) mit mindestens einem Kühlelement (7) eine Abkühlung des Bereichs erfolgt, indem das mindestens eine Kühlelement (7) in die Bewegungsrichtung (L) mit vorgegebener Geschwindigkeit (v) bewegt wird,
**dadurch gekennzeichnet, dass**
die Erwärmung des Bereichs mittels des mindestens einen Induktors (5, 6) entlang der zu härtenden Oberfläche (2) des Werksstücks (1) senkrecht zur Bewegungsrichtung (L) mit unterschiedlicher Magnetfeldstärke erfolgt, wobei eine Veränderung der Magnetfeldstärke entlang der Oberfläche (2) des Werkstücks (1) senkrecht zur Bewegungsrichtung (L) abhängig von der Form und/oder der folgenden Hartbearbeitung des Werkstücks (1) erfolgt, und wobei
mindestens ein Vorwärminduktor (5) und mindestens ein Härteinduktor (6) zur Erwärmung des Bereichs verwendet werden, wobei der Vorwärminduktor (5) in Bewegungsrichtung (L) dem Härteinduktor (6) vorherläuft; oder
ein einziger Induktor (5, 6) mit mindestens einem Vorwärmteil (5) und mindestens einem Härteteil (6) zur Erwärmung des Bereichs verwendet wird, wobei das Vorwärmteil (5) in Bewegungsrichtung (L) dem Härteteil (6) vorherläuft.

2. Verfahren nach Anspruch 1, **dadurch gekennzeichnet, dass** der Vorwärminduktor (5) und/oder der Härteinduktor (6) oder das Vorwärmteil (5) und/oder das Härteteil (6) des Induktors (5, 6) mit unterschiedlicher Magnetfeldstärke betrieben werden.

3. Verfahren nach Anspruch 2, **dadurch gekennzeichnet, dass** entlang der Oberfläche (2) des Werkstücks (1) senkrecht zur Bewegungsrichtung (L) der Vorwärminduktor (5) oder das Vorwärmteil (5) des Induktors (5, 6) mit unterschiedlicher Magnetfeldstärke und der Härteinduktor (6) oder das Härteteil (6) des Induktors (5, 6) mit konstanter Magnetfeldstärke betrieben werden.

4. Verfahren nach einem der Ansprüche 1 bis 3, **dadurch gekennzeichnet, dass** für schlupffreies Härten eines kreisförmig geschlossenen Werkstücks (1) in zwei Teilbereichen des Werkstücks (1) ein mindestens zweimaliges Überstreichen der Teilbereiche mittels mindestens eines Induktors (5, 6) erfolgt.

5. Verfahren nach einem der Ansprüche 1 bis 4, **dadurch gekennzeichnet, dass** die Erwärmung eines definierten Abschnitts des Bereichs mit dem mindestens einen Härteinduktor (6) oder dem Härteteil (6) des Induktors (5, 6) in einem Zeitraum von höchstens 10 Sekunden, vorzugsweise in einem Zeitraum von höchstens 5 Sekunden, erfolgt.

6. Verfahren nach einem der Ansprüche 1 bis 5, **dadurch gekennzeichnet, dass** die Erwärmung des Bereichs mit dem mindestens einen Härteinduktor (6) oder dem Härteteil (6) des Induktors (5, 6) auf eine Temperatur zwischen 950 °C und 1.300 °C zum Zwecke des Austenitisierens erfolgt.

7. Verfahren nach einem der Ansprüche 1 bis 6, **dadurch gekennzeichnet, dass** die Abkühlung des Bereichs durch ein Kühlelement (7) in Form einer Abschreckbrause erfolgt.

8. Verfahren nach einem der Ansprüche 1 bis 7, **dadurch gekennzeichnet, dass** das metallische Werkstück (1) einen Stahl mit einem Kohlenstoffgehalt zwischen 0,2 und 1,7 Gew.-%, vorzugsweise zwischen 0,3 und 1,0 Gew.-%, aufweist.

## Claims

1. Method for the surface hardening of a metal workpiece (1), in which first a region of the workpiece is heated by at least one inductor (5, 6), in that the at least one inductor (5, 6) is moved at a prescribed speed (v) in a direction of movement (L) along the surface (2) of the workpiece (1), the heating of the region of the workpiece (1) being followed by a cooling of the region by at least one cooling element (7), in that the at least one cooling element (7) is moved at a prescribed speed (v) in the direction of movement (L),
**characterized in that**
the heating of the region by means of the at least one inductor (5, 6) is performed with varying magnetic field strength along the surface (2) to be hardened of the workpiece (1) perpendicularly to the direction of movement (L), a variation of the magnetic field strength along the surface (2) of the workpiece (1) perpendicularly to the direction of movement (L) taking place depending on the form and/or the subsequent hard machining of the workpiece (1), and
at least one preheating inductor (5) and at least one hardening inductor (6) being used for heating the region, the preheating inductor (5) running ahead of the hardening inductor (6) in the direction of movement (L); or
a single inductor (5, 6) with at least one preheating part (5) and at least one hardening part (6) being used for heating the region, the preheating part (5) running ahead of the hardening part (6) in the direction of movement (L).

2. Method according to Claim 1, **characterized in that** the preheating inductor (5) and/or the hardening inductor (6) or the preheating part (5) and/or the hardening part (6) of the inductor (5, 6) being operated with varying magnetic field strength.

3. Method according to Claim 2, **characterized in that** the preheating inductor (5) or the preheating part (5) of the inductor (5, 6) is operated with varying magnetic field strength and the hardening inductor (6) or the hardening part (6) of the inductor (5, 6) is operated with constant magnetic field strength along the surface (2) of the workpiece (1) perpendicularly to the direction of movement (L).

4. Method according to one of Claims 1 to 3, **characterized in that**, for slip-free hardening of a circularly continuous workpiece (1) in two partial regions of the workpiece (1), the partial regions are passed over at least twice by at least one inductor (5, 6).

5. Method according to one of Claims 1 to 4, **characterized in that** the heating of a defined portion of the region by the at least one hardening inductor (6) or the hardening part (6) of the inductor (5, 6) takes place in a time period of at most 10 seconds, preferably in a time period of at most 5 seconds.

6. Method according to one of Claims 1 to 5, **characterized in that** the heating of the region by the at least one hardening inductor (6) or the hardening part (6) of the inductor (5, 6) takes place to a temperature of between 950°C and 1300°C for the purpose of austenitizing.

7. Method according to one of Claims 1 to 6, **characterized in that** the cooling of the region takes place by a cooling element (7) in the form of a quenching spray.

8. Method according to one of Claims 1 to 7, **characterized in that** the metal workpiece (1) comprises a steel with a carbon content of between 0.2 and 1.7% by weight, preferably between 0.3 and 1.0% by weight.

## Revendications

1. Procédé de durcissement de couche superficielle d'une pièce métallique (1), dans lequel une zone de la pièce est tout d'abord chauffée au moyen d'au moins un inducteur (5, 6) par déplacement de l'au moins un inducteur (5, 6) dans un sens de déplacement (L) le long de la surface (2) de la pièce (1) à une vitesse prédéterminée (v), dans lequel la zone est refroidie au moyen d'au moins un élément de refroidissement (7) après le chauffage de la zone de la pièce (1) par déplacement de l'au moins un élément de refroidissement (7) dans le sens de déplacement (L) à une vitesse prédéterminée (v),
**caractérisé en ce que**
la zone est chauffée au moyen de l'au moins un inducteur (5, 6) avec une intensité de champ magnétique différente le long de la surface à durcir (2) de la pièce (1) perpendiculairement au sens de déplacement (L), l'intensité du champ magnétique étant modifiée le long de la surface (2) de la pièce (1) perpendiculairement au sens de déplacement (L) en fonction de la forme et/ou de l'usinage dur ultérieur de la pièce (1), et
au moins un inducteur de préchauffage (5) et au moins un inducteur de dureté (6) étant utilisés pour chauffer la zone,
l'inducteur de préchauffage (5) précédant l'inducteur de durcissement (6) dans le sens de déplacement (L) ; ou
un seul inducteur (5, 6) pourvu d'au moins une partie de préchauffage (5) et d'au moins une partie de durcissement (6) étant utilisé pour chauffer la zone, la partie de préchauffage (5) précédant la partie de durcissement (6) dans le sens de déplacement (L).

2. Procédé selon la revendication 1, **caractérisé en ce que** l'inducteur de préchauffage (5) et/ou l'inducteur de durcissement (6) ou la partie de préchauffage (5) et/ou la partie de durcissement (6) de l'inducteur (5, 6) fonctionne (nt) avec des intensités de champ magnétique différentes.

3. Procédé selon la revendication 2, **caractérisé en ce que**, le long de la surface (2) de la pièce (1), perpendiculairement au sens de déplacement (L), l'inducteur de préchauffage (5) ou la partie de préchauffage (5) de l'inducteur (5, 6) fonctionne avec une intensité de champ magnétique différente et l'inducteur de durcissement (6) ou la partie de durcissement (6) de l'inducteur (5, 6) fonctionne avec une intensité de champ magnétique constante.

4. Procédé selon l'une des revendications 1 à 3, **caractérisé en ce qu'**un frottement, effectué au moins deux fois, des sous-zones est réalisé au moyen d'au moins un inducteur (5, 6) pour durcir sans glissement une pièce (1) fermée de manière circulaire dans deux sous-zones de la pièce (1).

5. Procédé selon l'une des revendications 1 à 4, **caractérisé en ce qu'**une partie définie de la zone est chauffée avec au moins un inducteur de durcissement (6) ou la partie de durcissement (6) de l'inducteur (5, 6) pendant une durée de 10 secondes maximum, de préférence pendant une durée de 5 secondes maximum.

6. Procédé selon l'une des revendications 1 à 5, **caractérisé en ce que** la zone est chauffée au moyen d'au moins un inducteur de durcissement (6) ou de la partie de durcissement (6) de l'inducteur (5, 6) à une température comprise entre 950 °C et 1300 °C pour obtenir l'austénitisation.

7. Procédé selon l'une des revendications 1 à 6, **caractérisé en ce que** la zone est refroidie au moyen d'un élément de refroidissement (7) se présentant sous la forme d'un arrosoir de trempe.

8. Procédé selon l'une des revendications 1 à 7, **caractérisé en ce que** la pièce métallique (1) comprend un acier dont la teneur en carbone est comprise entre 0,2 et 1,7 % en poids, de préférence entre 0,3 et 1,0 % en poids.
